Europäisches Patentamt

European Patent Office

Office européen des brevets

(19)

(11) **EP 1 043 290 A1**

(12) **EUROPEAN PATENT APPLICATION**

(43) Date of publication:
**11.10.2000 Bulletin 2000/41**

(51) Int. Cl.$^7$: **C04B 35/56**, C04B 41/50,
C04B 41/45, B32B 18/00

(21) Application number: **00107507.6**

(22) Date of filing: **06.04.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **08.04.1999 JP 10125699**

(71) Applicant: **NGK INSULATORS, LTD.
Nagoya-City, Aichi Prefecture 467-8530 (JP)**

(72) Inventors:
• **Hanzawa, Shigeru
  Kagamigahara-city, Gifu-pref.,509-0122 (JP)**
• **Nakano, Kenji
  Tokai-city, Aichi-pref.,477-0032 (JP)**
• **Okumura, Kiyoshi
  Kasugai-city, Aichi-pref., 487-0013 (JP)**
• **Ito, Shigenori
  Kasugai-city, Aichi-pref., 487-0033 (JP)**
• **Sato, Kiyoshi
  Nagoya-city, Aichi-pref., 466-0054 (JP)**

(74) Representative:
**Bühling, Gerhard, Dipl.-Chem. et al
Patentanwaltsbüro
Tiedtke-Bühling-Kinne & Partner
Bavariaring 4
80336 München (DE)**

(54) **Carbonaceous material having oxidation-resistant protective layer and method for producing the same**

(57) Provided is a carbonaceous material having an oxidation-resistant protective layer which is substantially not oxidized at a temperature of at least 800°C in the air. The oxidation-resistant protective layer preferably comprises a plurality of layers and at least one layer of them is a boron-containing layer on which a layer comprising glass or ceramic is formed. The carbonaceous material preferably comprises a C/C composite, an Si-SiC composite material or an SiC composite material. A method for producing the carbonaceous material is also provided.

Fig. 1

**Description**

BACKGROUND OF THE INVENTION

Field of the Invention

The present invention relates to a carbonaceous material having an oxidation-resistant protective layer which is substantially not oxidized at a temperature of at least 800°C in the air, a method for producing the carbonaceous material, and use of the composite material.

Description of the Prior Art

At present, with rapid progress of technical innovation, materials which are substantially not oxidized even at high temperatures of at least 800°C, preferably 1000°C or higher in the air are desired earnestly especially in the fields of space development such as spacecraft and spaceplane, implements for kilns used in the presence of oxygen, setters for ceramic capacitors, and production of protective glasses for plasma televisions known as large-sized wall displays. Of course, for using the materials in these fields, they are required to have high strength at high temperatures such as high thermal shock resistance, high reliability such as tenacity, shock resistance, abrasion resistance, and environmental resistance such as corrosion resistance, oxidation resistance, radiation resistance, and, besides, required to be light in weight from the points of energy-saving and easy handling.

In a part of these fields, silicon nitride or silicon carbide materials excellent in heat resistance and high in strength have been used, but these materials have the defect of being fragile as their inherent property and are considerably fragile even with small flaws, and have no sufficient strength against thermal and mechanical shocks.

As a means for solving the defects of ceramic, ceramic composite materials (CMC) comprising continuous ceramic fibers, and use of them are developed in a part of the fields. These attempts include the following methods. Usually several hundred to several thousand ceramic long fibers of about 10 μm in diameter are bundled to form fiber bundles (yarns), and the fiber bundles are arranged in two-dimensional or three-dimensional directions to make unidirectional sheets (UD sheets) or various cloths or these sheets or cloths are laminated to form a preform of a given shape (fiber preform), followed by forming a matrix in the preform by CVI method (chemical vapor phase impregnation method) or inorganic polymer impregnation and firing method or forming a matrix by filling the preform with ceramic powders by cast molding method and then firing the preform. Thus, ceramic fiber composite materials (CMC) having ceramic matrix mixed with fibers have been developed.

As examples of such CMC, there are known C/C composites in which matrices comprising carbon are formed in the spaces between two-dimensionally or three-dimensionally arranged carbon fibers, and SiC fiber-reinforced Si-SiC composites formed by impregnating a molded body containing SiC fibers and SiC particles with Si. However, although these SiC fiber-reinforced Si-SiC composites are superior in oxidation resistance, creep resistance and spalling resistance, they are inferior to C/C composites in tenacity and, hence, low in shock resistance because SiC fibers are inferior in lubricity with Si-SiC to cause small drawing effect between the mother body and the fibers, and, furthermore, they are readily burnt in the presence of oxygen because carbon fibers are partially used.

SUMMARY OF THE INVENTION

In view of the above-mentioned problems in the conventional techniques, the present invention has been accomplished, and the object is to provide a novel carbonaceous material which is substantially not oxidized even at high temperatures of at least 800°C, preferably 1000°C or higher in the air, and has high strength at high temperatures such as high thermal shock resistance and high reliability as materials, such as tenacity, shock resistance, abrasion resistance, and environmental resistance such as corrosion resistance, oxidation resistance, radiation resistance, and, besides, has light weight from the points of energy-saving and easy handling, and to provide a method for producing the carbonaceous material.

As a result of various investigations conducted by the inventors, it has been found that the above object can be attained by a carbonaceous material having an oxidation-resistant protective layer which is substantially not oxidized at a temperature of at least 800°C in the air, and the present invention has been accomplished. Furthermore, it has been found that the above object can be attained by a method for producing a carbonaceous material having an oxidation-resistant protective layer which is substantially not oxidized at a temperature of at least 800°C in the air, characterized by forming on the surface of the carbonaceous material at least a boron-containing layer and, if necessary, a layer comprising glass and/or ceramic as the oxidation-resistant protective layer substantially not oxidized in the air, and thus the present invention has been accomplished.

BRIEF DESCRIPTION OF THE DRAWINGS

Fig. 1 is an oblique view which schematically shows a structure of yarn assembly which constitutes the basic structure of the Si-SiC composite material and the SiC composite material used as a substrate of the carbonaceous material having the oxidation-resistant protective layer of the present invention.

Fig. 2 (a) is a sectional view of the Si-SiC composite material taken on line IIa-IIa of Fig. 1, and Fig. 2 (b) is a sectional view of the material taken on line IIb-IIb of Fig. 1.

Fig. 3 (a) is a sectional view of the SiC composite material taken on line IIa-IIa of Fig. 1, and Fig. 3 (b) is a sectional view of the material taken on line IIb-IIb of Fig. 1.

Fig. 4 is a graph which shows the results of measurement test on oxidation resistance of a carbonaceous material having a protective layer comprising boron carbide/alumina which is one embodiment of the carbonaceous material having an oxidation-resistant protective layer of the present invention.

Fig. 5 is a graph which shows the results of measurement test on oxidation resistance of a carbonaceous material having a protective layer comprising boron carbide/alumina/zirconia which is another embodiment of the carbonaceous material having an oxidation-resistant protective layer of the present invention.

DESCRIPTION OF THE PREFERRED EMBODIMENTS

In the carbonaceous materials of the present invention, a raw material mainly composed of carbon fibers is used as a substrate. As the carbonaceous materials used in the present invention, first, mention may be made of carbon fibers. As the carbon fibers, any carbon fibers can be used irrespective of the production method and the starting materials. In actual use, carbon fibers are formed into a given shape using a binder or the like. From the point of endurance, C/C composites mentioned hereinafter are preferred. Furthermore, composite materials comprising the C/C composite impregnated with Si are also included in the carbonaceous materials in the present invention. As these composite materials impregnated with Si, there may be suitably used Si-SiC composite materials and SiC composite materials defined below and explained in detail hereinafter. In this specification, the carbonaceous materials include not only the carbon fibers per se, but also the C/C composites included in the carbon fibers in a broad sense. In addition, the carbonaceous materials include specifically processed si-SiC composite materials and SiC composite materials obtained by impregnating the C/C composites with a specific amount of metallic Si. Properties and production method there of are also explained in detail hereinafter. For the purpose of avoiding confusion in denomination, the term "carbonaceous material" in this specification is used as a term including C/C composite, Si-SiC composite material and SiC composite material. Therefore, in the present invention, both the carbon fibers in a narrow sense and the above composite materials can be used as the substrate.

In this specification, the C/C composite means a molded body obtained in the following manner or a fired body obtained by firing the molded body. That is, carbon fiber bundles are prepared by containing a pitch or coke which is a powdery binder acting as a matrix for a bundle of carbon fibers and becomes free carbon for the bundle of carbon fibers after firing and, if necessary, a phenolic resin or the like, and a flexible film comprising a plastic such as a thermoplastic resin is formed around the carbon fiber bundles to obtain preformed yarns as a flexible intermediate material. Then, the preformed yarns are made to sheets or woven fabrics by a method disclosed in JP-A-2-80639, and a necessary number of them are laminated, followed by molding the laminate by a hot press to obtain the molded body. That is, in the present invention the C/C composite means a composite material comprising carbon fibers and carbon other than carbon fibers and having a specific laminate structure and a matrix structure in which the carbon fibers constitute laminate structures comprising a specific number of carbon fiber bundles, and the carbon other than the carbon fibers form a matrix between the laminate structures and fill the spaces between the laminate structures.

As the C/C composites used as a substrate, there may be used those which are obtained by bundling several hundred to several thousand carbon fibers of about 10 μm in diameter to form fiber bundles (yarns), coating the fiber bundles with a thermoplastic resin to obtain a flexible intermediate materials, forming the intermediate materials into sheets by the method disclosed in JP-A-2-80639, arranging the sheets in two-dimensional or three-dimensional direction to make unidirectional sheets (UD sheets) or various cloths, laminating the sheets or cloths to form a preform (hereinafter sometimes referred to as fiber preform) of a given shape, firing the film comprising organic materials such as thermoplastic resin formed on the outer peripheral surface of the fiber bundles of the preform, and carbonizing and removing the film. The disclosure of JP-A-2-80639 is incorporated herein by reference. In the C/C composite used in the present invention, the carbon component other than carbon fibers in the yarns is preferably carbon powder, most preferably graphitized carbon powder.

The Si-SiC composite material in the present invention is a composite material which is composed of 55-75% by weight of carbon, 1-10% by weight of silicon and 10-50% by weight of silicon carbide, and comprises a yarn assembly in which yarns containing at least bundles of carbon fibers and carbon component other than carbon fibers are oriented in layer direction and three-dimensionally combined and integrated not so as to separate from each other and a matrix comprising an Si-SiC material filled between the adjacent yarns in the yarn assembly, said composite material having a kinetic coefficient of friction of 0.05-0.6 and a controlled porosity of 0.5-10%. This material can be produced by the method disclosed in JP-Appln.No.10-267402 filed on September 4, 1998. Therefore, the disclosure of JP-Appln.No.10-267402 is incorporated herein by reference.

The Si-Sic material here includes some different phases from a silicon phase comprising silicon remaining in unreacted state to a phase of nearly pure silicon carbide, typically, comprises a silicon phase and a silicon carbide phase, in which the silicon carbide phase can contain an SiC coexisting phase where the content of silicon changes in inclined state. Therefore, the Si-SiC material is a generic name of materials having a carbon concentration within the range of 0-50 mol% in Si-SiC series. In the Si-SiC composite material of the present invention, the matrix part is formed of the Si-SiC material.

Furthermore, this Si-SiC composite material preferably has a matrix having an inclined composition in which the content of silicon increases in proportion to the distance from the surface of the yarns. Moreover, in this Si-SiC composite material, preferably, the yarn assembly comprising carbon fibers is constituted of a plurality of yarn array elements, each of the yarn array elements being formed by two-dimensionally arranging the yarns comprising bundles of a specific number of carbon fibers in nearly parallel with each other, and the yarn assembly being formed by laminating the yarn array elements. Thus, the Si-SiC composite material has a lamination structure formed by laminating a plurality of the yarn array elements in a specific direction.

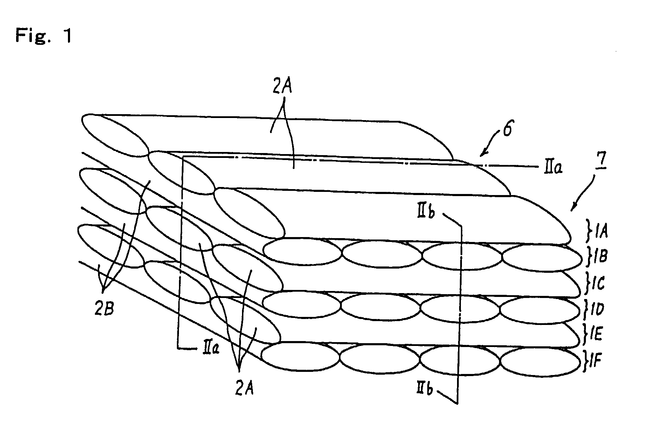

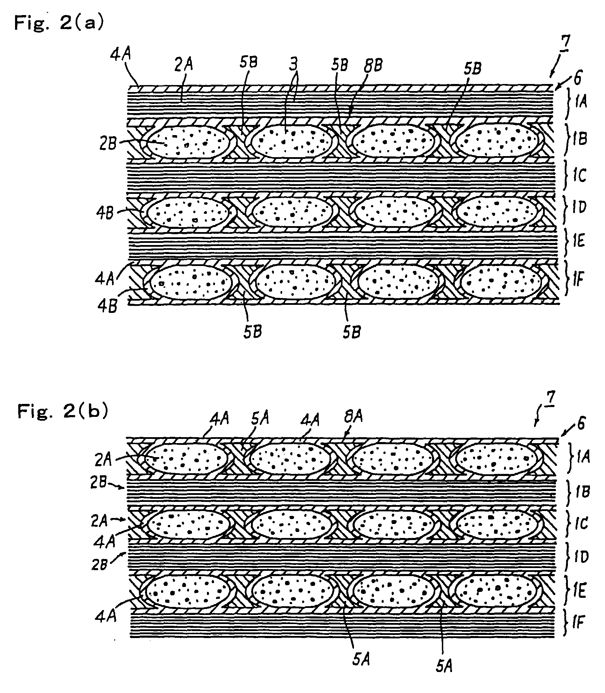

Fig. 1 is an oblique view which schematically explains the concept of a yarn assembly, Fig. 2 (a) is a sectional view taken on line IIa-IIa of Fig. 1, and Fig. 2 (b) is a sectional view taken on line IIb-IIb of Fig. 1. The skeleton of Si-SiC composite material 7 is composed of yarn assembly 6. The yarn assembly 6 is formed by laminating yarn array elements 1A, 1B, 1C, 1D, 1E and 1F in vertical direction. In each yarn array element, yarns 3 are two-dimensionally arranged and the longer directions of the respective yarns are nearly parallel with each other. The longer direction of the respective yarns in the upper and the lower yarn array elements which are adjacent to each other cross at right angles with each other. That is, the longer directions of the respective yarns 2A of the yarn array elements 1A, 1C and 1E are parallel with each other, and cross at right angles with the longer directions of the respective yarns 2B of the yarn array elements 1B, 1D and 1F. Each of the yarns is composed of a fiber bundle 3 comprising carbon fibers and a carbon component other than the carbon fibers. Lamination of the yarn array elements gives the yarn assembly 6 in the form of three-dimensional lattice. Each yarn has a nearly oval section because it is pressed during the press molding step referred to hereinafter. In the yarn array elements 1A, 1C and 1E, the spaces between the adjacent yarns are filled with matrix 8A, which extends along the surface of yarns 2A in parallel therewith. In the yarn array elements 1B, 1D and 1F, the spaces between the adjacent yarns are filled with matrix 8B, which extends along the surface of yarns 2B in parallel therewith.

In this example, matrices 8A and 8B respectively comprise silicon carbide phases 4A and 4B which cover the surface of the yarns and Si-SiC material phases 5A and 5B which are less in the content of carbon than in 4A and 4B. The silicon carbide phase may also partially contain silicon. Furthermore, in this example, silicon carbide phases 4A and 4B are produced also between yarns 2A and 2B which are vertically adjacent with each other.

Matrices 8A and 8B extend, narrowly, preferably, linearly along the surface of the yarns, and the matrices 8A and 8B cross at right angles with each other. The matrix 8A in the yarn array elements 1A, 1C and 1E and the matrix 8B in the yarn array elements 1B, 1D and 1F which cross at right angles with 1A, 1C and 1E connect with each other at the space portions between the yarns 2A and 2B. As a result, the matrices 8A and 8B form a three-dimensional lattice as a whole.

The SiC composite material in the present invention is an SiC-C/C composite material which comprises silicon carbide, carbon fibers and carbon component other than the carbon fibers and has a structure comprising a skeleton and a matrix formed around the skeleton, where at least 50% of silicon carbide is β-type, the skeleton is formed of carbon fibers and a carbon component other than the carbon fibers, silicon carbide may be present in a part of the skeleton, the matrix is formed of silicon carbide, the matrix and the skeleton are integrally formed, and the composite material has a porosity of 0.5-5% and a two-peak type distribution of average pore diameter.

Therefore, this SiC composite material uses the C/C composite composed of carbon fiber bundles as a skeleton, and, hence, even if SiC is formed in a part of the C/C composite, the structure of the respective carbon fibers is not broken and is retained and thus the carbon fibers do not become short fibers due to conversion of the carbon fibers to silicon carbide. As a result, there is an important feature that mechanical strength of the C/C composite which is a raw material is nearly retained or increases due to the conversion to silicon carbide. In addition, the SiC composite material has such a composite structure that a matrix comprising SiC material is formed between adjacent yarns in the yarn assembly. This material can be produced by the method disclosed in JP-Appln. No.11-31979 filed on February 9, 1999. Therefore, the disclosure of JP-Appln. No.11-31979 is incorporated herein by reference.

The SiC material in the present invention is a material which contains silicon carbides differing in the degree of bonding to carbon and is produced in the following manner. In the present invention, the C/C composite is impregnated with metallic silicon, and in this case the metallic silicon reacts with carbon atoms constituting the carbon fibers in the composite and/or free carbon atoms remaining on the surface of the carbon fibers, and is partially carbonized. Therefore, partially carbonized silicon is produced on the uppermost surface of the C/C composite or between the yarns comprising carbon fibers, and as a result, a matrix comprising silicon carbide is formed between the yarns.

This matrix can contain some different phases from a silicon carbide-like phase in which a slight amount of silicon and carbon bond to each other to a pure silicon carbide crystal phase. However, this matrix can contain metallic silicon only below the limit of detection (0.3% by weight) according to analysis with X-ray. That is, this matrix typically comprises a silicon carbide phase, but the silicon carbide phase can contain SiC-like phase in which the content of silicon changes in inclined manner. Therefore, the SiC material is a generic name for materials of SiC series containing carbon in the concentration of 0.01-50 mol%. In order to control the carbon concentration to less than 0.01 mol%, the amount of metallic silicon to be added must be severely calculated in relation with the amount of free carbon in the C/C composite, and, besides, control of temperature at the final step becomes complicated, and, therefore, the control of the carbon concentration to less than 0.01 mol% is not substantial. Accordingly, it is theoretically possible to control the carbon concentration to about 0.001 mol%.

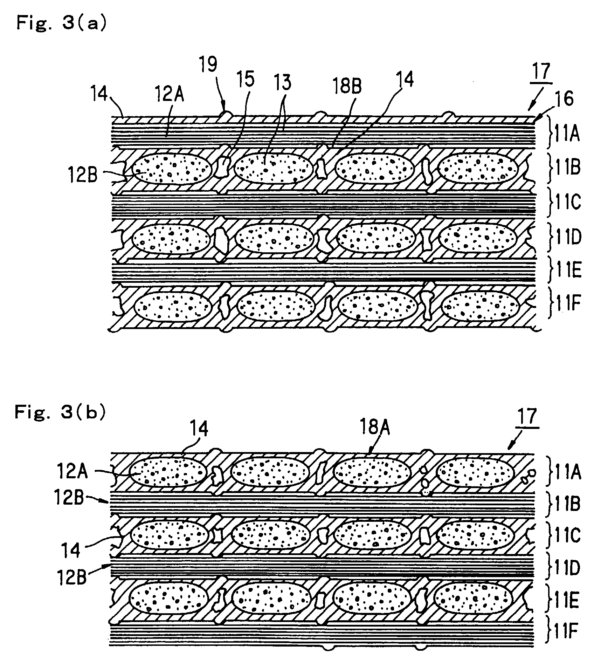

This SiC composite material will also be further explained using the drawings. The skeleton of this SiC composite material is also basically the same as shown in Fig. 1. The sectional view of the SiC composite material in the present invention taken on line IIa-IIa of Fig. 1 is shown in Fig. 3(a), and the sectional view taken on line IIb-IIb of Fig. 1 is shown in Fig. 3(b).

The skeleton of SiC composite material 17 is composed of yarn assembly 16 like the skeleton of the Si-SiC composite material. The yarn assembly 16 is formed by laminating yarn array elements 11A, 11B, 11C, 11D, 11E and 11F in vertical direction. In each yarn array element, yarns 13 are two-dimensionally arranged and the longer directions of the respective yarns are nearly parallel with each other. The longer direction of the respective yarns in the upper and the lower yarn array elements which are vertically adjacent to each other cross at right angles with each other. That is, the longer directions of the respective yarns 12A of the yarn array elements 11A, 11C and 11E are parallel with each other, and cross at right angles with the longer directions of the respective yarns 12B of the yarn array elements 11B, 11D and 11F. Each of the yarns is composed of a fiber bundle 13 comprising carbon fibers and a carbon component other than the carbon fibers. Lamination of the yarn array elements gives the yarn assembly 16 in the form of three-dimensional lattice. Each yarn has a somewhat oval section because it is pressed during the press molding step referred to hereinafter.

In the yarn array elements 11A, 11C and 11E, the spaces between the adjacent yarns are filled with matrix 18A, which extends along the surface of yarns 12A in parallel therewith. In the yarn array elements 11B, 11D and 11F, the spaces between the adjacent yarns are filled with matrix 18B, which extends along the surface of yarns 12B in parallel therewith. As shown in Fig. 3(a) and Fig. 3(b), the matrices 18A and 18B comprise silicon carbide phase 14 covering the surface of each yarn. A part of the silicon carbide phase may protrude at the surface as a small protrusion 19 or may protrude into the carbon fiber layer inside the composite material. Inside the small protrusion, a pore (void: 15) having a pore diameter of about 100 μm as a median is formed. Since most of the small protrusions 19 are formed along the trace of the matrix comprising carbon component other than carbon fibers of the C/C composite of the raw material, density of the small protrusions 19 per unit area can be adjusted by suitably selecting the distance between the yarns and/or the distance between the yarn array elements. The silicon carbide phase 14 may also be formed between the adjacent yarn 12A and 12B.

Matrices 18A and 18B extend, narrowly, preferably, linearly along the surface of the yarns, and the matrices 18A and 8B cross at right angles with each other. The matrix 18A in the yarn array elements 11A, 11C and 11E and the matrix 18B in the yarn array elements 11B, 11D and 11F which cross at right angles with 11A, 11C and 11E connect with each other at the space portions between the yarns 12A and 12B. As a result, the matrices 18A and 18B form a three-dimensional lattice as a whole.

Next, explanation will be made of the carbonaceous material of the present invention having an oxidation-resistant protective layer which is substantially not oxidized at a temperature of at least 800°C in the air. The carbonaceous material of the present invention is a material comprising the above-mentioned carbonaceous material having a given shape and an oxidation-resistant protective film formed thereon which is substantially not oxidized even at high temperatures of higher than 800°C even in the air. The term "substantially not oxidized" here means that when a sample is kept for at least 24 hours under the condition of a given high temperature, for example, 800°C in the air, increase or decrease of the weight is 0.5% or less. The oxidation-resistant protective layer which is substantially not oxidized at a temperature of at least 800°C in the air is a layer comprising at least one layer selected from boron-containing layer, glass and ceramic. As examples of the oxidation-resistant protective layer comprising a plurality of layers, mention may be made of a layer comprising a boron-containing layer and glass, a layer comprising a boron-containing layer and ceramic, and a layer comprising a boron-containing layer, ceramic and glass. Of course, the ceramic layer includes those which comprise a plurality of different ceramic layers. The order of lamination of these layers can be suitably

EP 1 043 290 A1

selected depending on the desired performances and the conditions of use. Of course, a layer other than the above layers may be provided between the above layers

It is necessary that at least the boron-containing layer is formed. It is preferred that the boron-containing layer is usually a layer nearer to the surface of the substrate, preferably, an innermost layer, namely, which is directly formed on the surface of the carbonaceous material having a given shape. This is because even when the oxidation-resistant protective layer formed on the outermost surface is peeled or cracked for some reasons, the carbonaceous material is protected by the oxidation-resistant characteristics of the boron-containing layer. Of course, if necessary, a primer layer or a ceramic layer may be provided between the boron-containing layer and the surface of the carbonaceous material which is a substrate.

The boron-containing layer may be provided as an outermost layer depending on the mode of use of the carbonaceous material according to the present invention. For example, when boron carbide is used as an outermost layer and when this is exposed to an oxidizing atmosphere of higher than 400°C, boron carbide is oxidized to form boron oxide in molten state whereby the surface of the substrate carbonaceous material can be protected. Of course, when exposed to an oxidizing atmosphere of higher than 400°C for a long time, the boron carbide layer wholly becomes boron oxide, and the surface of the substrate is exposed and is readily oxidized. Therefore, for such a use as being exposed to an oxidizing atmosphere of higher than 400°C over a long period of time, it is preferred that the outermost surface comprises a layer comprising glass or ceramic.

Thickness of the boron-containing layer is 10-500 $\mu$m, preferably 50-200 $\mu$m. If the thickness is less than 10 $\mu$m, it is difficult to form the boron-containing layer as a uniform continuous layer. Even if the boron carbide layer is formed in a thickness exceeding 500 $\mu$m, improvement of oxidation resistance cannot be expected and this is not economical since boron-containing materials are expensive. The boron-containing layer can be formed by the direct coating on the surface of the material, and, furthermore, can also be formed by thermal spraying or CVD method. It can be formed by thermal spraying a boron-containing material onto the surface of the carbonaceous material together with an inert gas such as argon. The boron-containing materials used for the formation of the boron-containing layer include those of high oxidation resistance, such as boric acid glass, borosilicate glass, boron nitride and boron carbide. Among them, boron carbide is preferred considering oxidation resistance.

An oxidation-resistant protective layer comprising glass is preferred because it enhances oxidation resistance at high temperatures. The glass includes, for example, high-melting glass such as Pyrex glass (trademark) manufactured by Corning Glass Works. This layer can also be formed by thermal spraying as in the case of formation of the boron-containing layer. Thickness of this layer is 10-500 $\mu$m which is the same as that of the boron-containing layer. If the thickness is less than 10 $\mu$m, sufficient oxidation resistance is sometimes not exhibited upon exposure to high temperatures exceeding 800°C, for example, higher than 1000°C. Even if the glass layer is formed in a thickness exceeding 500 $\mu$m, improvement of oxidation resistance cannot be expected and this may damage the merit of light-weight of the carbonaceous material used as the substrate.

The layer comprising ceramic is a layer formed of a material mainly composed of an oxide, a carbide or a nitride of an element of Groups IIIa, IIIb and IVa-VIa, or a mixture thereof. More preferred are those which are mainly composed of materials selected from oxides such as alumina, silica, titania and zirconia, carbides of silicon, titanium, zirconium and the like, and nitrides of these metals. When the layer comprising ceramic is provided, since ceramic is higher in modulus of elasticity than glass, higher thermal stress is apt to be generated even if the thermal expansion coefficient is the same. For relaxation of the thermal stress, it is preferred to form a layer comprising a ceramic which contains micro-cracks. Micro-cracks per se pass oxygen therethrough, but by using the boron-containing layer in combination as an inner layer, boron oxide produced by oxidation is retained in the micro-structure of the micro-cracks and, as a result, penetration of oxygen can be prevented.

The layer comprising ceramic which contains micro-cracks is a layer comprising alumina and/or zirconia. A layer comprising these oxides shows an action to prevent the boron-containing layer from losing the function as a protective layer caused by the fact that when the boron-containing layer, for example, boron carbide, is exposed to oxidizing conditions, boron oxide is produced and this boron oxide is not adsorbed to carbon and runs out of the system. The layer comprising alumina and/or zirconia forms a spongy structure having numerous micro-pores in the space between carbon fibers of the carbonaceous material as a substrate. Boron oxide produced by oxidation is adsorbed to the structure to form the so-called oxidation resistant glass layer comprising boron oxide and alumina and/or zirconia, which exhibits the action to protect the surface of the substrate comprising carbon fibers. A layer comprising glass or ceramic may be further provided on the spongy oxide layer, whereby the higher oxidation resistance can be attained. The ratio of thermal expansion coefficients of the layers such as the boron-containing layer, the layer comprising ceramic and/or the layer comprising glass is preferably 1:2 or lower for inhibition of generation of thermal stress.

As the layer comprising ceramic, a layer comprising a glaze may be formed. The layer comprising a glaze is preferred because this can further assure the oxidation resistance at high temperatures exceeding 800°C, though somewhat lower than in the case of the oxidation-resistant protective layer comprising glass. As the glaze, there may be suitably used a glaze made of glass and a glaze made of enamel. As the glaze made of glass, there may be suitably

6

used, for example, those of GL-400 and GL-700 series manufactured by Ikebukuro Enamel Co., Ltd. As the glaze made of enamel, there may be generally suitably used enamels used for enameling treatment of iron sheets. That is, there may be suitably used those glazes which comprise 45-55% of silicon oxide, 10-20% of boron oxide, 5-10% of aluminum oxide, 15-30% of an alkali oxide, 0-10% of an oxide of alkaline earth element and 5-15% of other oxides. The oxidation-resistant protective layer comprising glaze can be formed by carrying out frit-coating by conventional method and heating the coat at about 1000°C for about 10 minutes in the air to perform the so-called self-glazing. Thickness of this layer may be about 10-500 μm which is the same as that of the boron-containing layer. If the thickness is less than 10 μm, sufficient oxidation resistance is sometimes not exhibited upon exposure to high temperatures exceeding 800°C for a long time. Even if this enamel layer is formed at a thickness exceeding 500 μm, improvement of oxidation resistance cannot especially be expected and this may damage the merit of light-weight of the carbonaceous material used as the substrate.

Detailed explanation will be made below as to the method for producing the carbonaceous material of the present invention having an oxidation-resistant protective layer substantially not oxidized at a temperature of at least 800°C in the air which comprises forming on the surface of the carbonaceous material at least a boron-containing layer and, optionally, a layer comprising glass and/or ceramic as an oxidation-resistant protective layer substantially not oxidized at a temperature of at least 800°C in the air. A carbonaceous material which is a substrate is processed to a desired shape depending on the final use, and on the surface of the carbonaceous material is formed a layer using a material selected so as to form a desired oxidation-resistant film by a suitably selected method such as coating, thermal spraying, CVD method or the like. For example, when a boron-containing layer is formed by thermal spraying, a boron-containing material is flame sprayed together with an inert gas such as argon. The frame spraying conditions are not limited, and it can be carried out under the conditions generally employed in the field of metal processing. The thermal spraying can be carried out separately on each of the surfaces of the given shape-retaining material or simultaneously on the whole surface, but from the points of assurance of uniformity and restriction of thermal spraying devices, it is preferred to carry out the thermal spraying on each of the surfaces or with rotating the desired shape-retaining material at a constant speed. Thickness of the flame sprayed boron carbide is usually about 10-500 μm as mentioned above.

For example, a first protective layer is formed by coating or the like a boron-containing material as the boron-containing layer on the surface of the substrate carbonaceous material, and, thereafter, the layer comprising glass and/or the layer comprising ceramic is formed on the first protective layer. If necessary, the enamel layer may be formed. The glass layer is formed by thermal spraying fine powders of Pyrex glass or the like in the same manner as in the case of boron carbide. Thickness of this layer is about 10-500 μm which is the same as of the boron-containing layer. The enamel layer can be formed by carrying out frit-coating the above-mentioned enamel material by conventional method and heating the coat at about 1000°C for about 10 minutes in the air to perform the so-called self-glazing. As aforementioned, the order of the formation of the oxidation-resistant protective layer can be suitably selected depending on design performance and object of use. As for the formation method, known methods such as coating, impregnation, thermal spraying, CVD method, etc. can be suitably selected and combined, taking into consideration the order of lamination, properties of the materials, etc.

A ceramic layer comprising alumina and/or zirconia and containing micro-cracks may be provided between the glass layer or the enamel layer and the boron-containing layer. This layer may also be formed by thermal spraying. As mentioned above, this ceramic layer containing micro-cracks has an action to prevent the boron-containing layer from losing the function as a protective layer caused by the fact that when the boron-containing layer is exposed to oxidizing conditions, boron oxide is produced and this boron oxide is not adsorbed to carbon and runs out of the system.

In the thus produced carbonaceous material of the present invention having an oxidation-resistant protective layer which is substantially not oxidized at a temperature of at least 800°C in the air, the carbonaceous material used as a substrate is high in shock resistance, low in thermal expansion coefficient and light in weight. Therefore, the oxidation-resistant protective layer is formed on the surface of the substrate carbonaceous material with maintaining its properties, and, thus, the carbonaceous material of the present invention shows high oxidation resistance even in the air, and, furthermore, few or no fine powders are formed due to mechanical actions such as abrasion. Furthermore, the carbonaceous material of the present invention is high in shock resistance because a boron-containing layer high in shock resistance is formed as at least one layer of the oxidation-resistant protective layer. Moreover, the surface flatness is very high, and, hence, it can be used very suitably as members for setters in firing of glass panels for plasma televisions or as materials for various implements for kilns.

The present invention will be explained in more detail by the following examples, but the present invention is not limited by these examples as far as the gist of the invention is not altered. Measurement of the oxidation resistant characteristics were conducted by the following methods.

(Preliminary test on oxidation resistance):

After a test sample was kept in the air heated to 800°C for 5 minutes, weight of the sample was measured, and weight decrease rate $W_2$ in comparison with the weight before the test was obtained by the following formula.

$$W_2=(W_0-W_1)/W_0 \times 100$$

In the above formula, $W_0$ denotes the weight of the sample before the oxidation resistant test, $W_1$ denotes the weight of the sample after the oxidation resistant test, and $W_2$ denotes the weight decrease rate.

(Test for measurement of oxidation resistance):

After a test sample was kept in the air heated to 800°C for a given period of time, weight of the sample was measured, and weight increase or decrease rate $W_2$ in comparison with the weight before the test was obtained by the following formula.

$$W_2=(W_0-W_1)/W_0 \times 100$$

In the above formula, $W_0$ denotes the weight of the sample before the oxidation resistant test, $W_1$ denotes the weight of the sample after the oxidation resistant test, and $W_2$ denotes the weight increase or decrease rate (in the case of decreasing, the sign "-" is given before the numerical value to distinguish from the case of increasing).

(Oxidation resistant test in bad environment):

After the test sample was kept in a chamber at a chamber temperature of 1000°C and in an argon atmosphere containing 3% of water vapor for 50 hours, weight of the sample was measured, and weight increase or decrease rate $W_2$ in comparison with the weight before the test was obtained by the following formula. Furthermore, the appearance of each sample was examined with the naked eye and a microscope to see whether cracks occurred or not.

$$W_2=(W_0-W_1)/W_0 \times 100$$

In the above formula, $W_0$ denotes the weight of the sample before the oxidation resistant test, $W_1$ denotes the weight of the sample after the oxidation resistant test, and $W_2$ denotes the weight increase or decrease rate (in the case of decreasing, the sign "-" is given before the numerical value to distinguish from the case of increasing).

Production Example

(1) Production of Si-SiC composite material)

Carbon fibers arranged in one direction were impregnated with a phenolic resin, and about 10,000 long carbon fibers of 10 μm in diameter were bundled to obtain a fiber bundle (yarn). The yarns were arranged in the blind-like form to prepare a yarn array element (prepreg sheet). The resulting yarn array elements were arranged as shown in Fig. 1 to obtain a prepreg sheet laminate. This prepreg sheet laminate was coated with a carbon-based adhesive, and the yarns were adhered to each other. The resulting adhered body was released from the mold. The released prepreg sheet laminate was put in an oven to cure the impregnated phenolic resin at 180°C and under normal pressure, followed by firing at 2000°C in a nitrogen atmosphere. Then, Si powders of 99.9% in purity and 1 mm in average particle size were added to the resulting carbon fiber-reinforced carbon composite material, and this material was put in a firing furnace having an inner temperature of 1300°C and an inner pressure of 1 hPa and kept therein for 4 hours with passing therethrough argon gas at a rate of 20 NL per minute. Then, the inner temperature was raised to 1600°C with keeping the inner pressure as it was, thereby to impregnate the composite material with Si. Thus, an Si-SiC composite material comprising Si, Si-C and carbon fibers was obtained. The resulting fired body was cut and subjected to outer peripheral processing to prepare a test piece of 9 mm × 9 mm × 9 mm in size.

(2) Formation ① of oxidation-resistant protective layer:

The test piece of 9 mm × 9 mm × 9 mm in size obtained in the above (1) was set at a jig and the test piece under being rotated at a given speed was subjected to thermal spraying with boron carbide powders having a purity of 99.5% and an average particle size of 25 μm or less (manufactured by ESK Co., Ltd.) using argon plasma to form preliminarily a boron carbide layer of about 50 μm in thickness on the surface of the test piece. Furthermore, the test piece was set at another jig and the whole surface of the test piece was subjected to the thermal spraying. This test piece was subjected to the above-mentioned preliminary test on oxidation resistance. For comparison, test pieces of Si-SiC composite material and oxidation resistant carbon of ISO63 of the same size as the above test piece were subjected to the same preliminary test. As a result of the preliminary test, in the case of the test piece on which the oxidation-resistant protective layer comprising boron carbide was formed, substantially no decrease of weight was seen. However, in the case of the test piece of the Si-SiC composite material, a weight decrease of about 33% was seen, and in the case of the test piece of the oxidation-resistant carbon of ISO63, a weight decrease of about 95% was seen.

(3) Formation ② of oxidation-resistant protective layer:

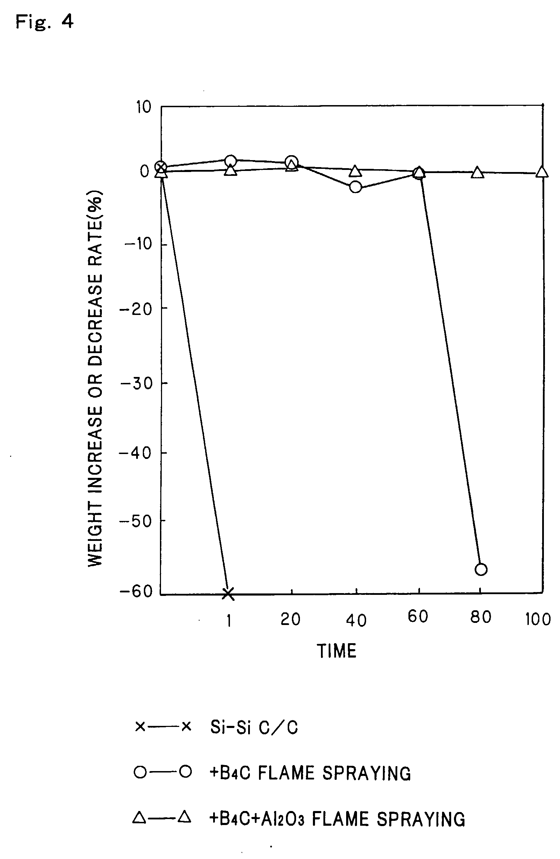

The Si-SiC composite material of 9 mm × 9 mm × 9 mm obtained in the above (1) was subjected to thermal spraying with boron carbide to produce a composite material having an oxidation-resistant protective layer of boron carbide of 50 μ m in thickness. This was further subjected to thermal spraying with alumina to produce a carbonaceous material having an oxidation-resistant protective layer of alumina of 50 μm in thickness. The resulting test piece was subjected to the above-mentioned test for measurement of oxidation resistance. The test piece of carbonaceous material of the present invention obtained in the above (2) was also subjected to the same test. As a comparative example, the test piece of the Si-SiC composite material was also subjected to the same test. The results are shown in Fig. 4. In the case of the test piece of the Si-SiC composite material, the free carbon all burnt after 1 hour from starting of the test. In the case of the test piece having only the boron carbide layer, no change was seen before 60 hours of the test, but the free carbon all burnt after lapse of 80 hours. This test piece stuck to the alumina jig holding the test piece. On the other hand, the test piece having additional alumina layer showed substantially no change in weight even after lapse of 100 hours, and did not stick to the alumina jig holding the test piece.

(4) Formation ③ of oxidation-resistant protective layer:

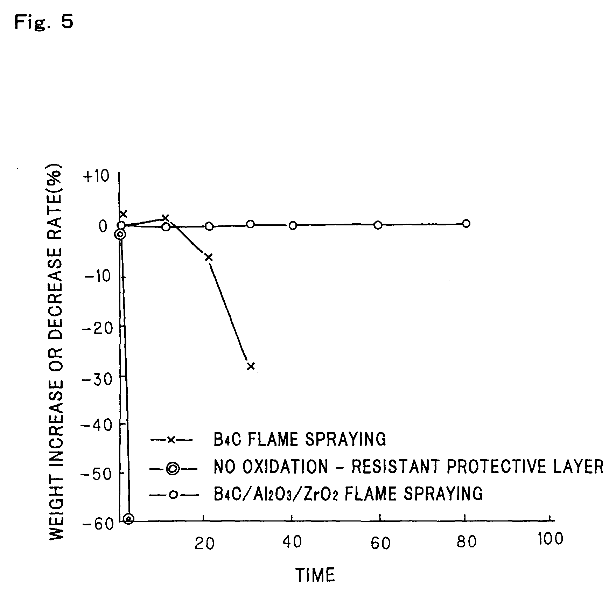

A carbonaceous material was produced in the same manner as in the formation ② of the oxidation-resistant protective layer in the above (3), except that a mixture of alumina and zirconia (1:1) in place of alumina was flame sprayed to form an oxidation-resistant protective layer of 50 μm in thickness comprising the mixture of alumina and zirconia (1:1) on the boron carbide layer in place of the alumina oxidation-resistant protective layer of 50 μm in thickness. A test piece of the resulting carbonaceous material was subjected to the above-mentioned test for measurement of oxidation resistance. The test piece of carbonaceous material of the present invention obtained in the above (2) was also subjected to the same test. As a comparative example, the test piece of the Si-SiC composite material was also subjected to the same test. The results are shown in Fig. 5. The results were nearly the same as those of Fig. 4. That is, in the case of the test piece of the Si-SiC composite material, the free carbon all burnt after 1 hour from starting of the test. In the case of the test piece having only the boron carbide layer, no change was seen before 60 hours of the test, but most of the free carbon burnt after lapse of 80 hours. On the other hand, the test piece having the layer comprising the mixture of alumina and zirconia (1:1) showed substantially no change in weight even after lapse of 80 hours.

The three materials of the present invention obtained in the above formations ① - ③ of the oxidation-resistant protective layers and the Si-SiC composite material as a comparative example were subjected to the oxidation resistant test in bad environment explained above. That is, after the test samples were kept in a chamber at a chamber temperature of 1000°C and in an argon atmosphere containing 3% of water vapor for 50 hours, weight of the samples was measured, and the weight increase or decrease rate $W_2$ in comparison with the weight before the test was obtained by the above formula. Furthermore, the appearance of each sample was examined with the naked eye and a microscope to see whether cracks occurred or not.

Table 1

| Kind of oxidation-resistant layer | Change in weight | Appearance |
|---|---|---|
| $B_4C$/alumina/zirconia | 0.2 | Cracks occurred |
| $B_4C$/alumina | 0.1 | - |
| $B_4C$ | -7.6 | Boron oxide ran off |
| None | -12.6 | - |

As can be seen from the above results, when an oxidation-resistant protective layer comprising $B_4C$ (boron carbide)/alumina was formed, the sample showed substantially no change in both the weight and the appearance even when used under the conditions of high temperatures exceeding 800°C for a long time. On the other hand, when a pro-

tective layer comprising B$_4$C (boron carbide)/alumina/zirconia was formed, change in the weight was little, but cracks occurred on the surface. However, when the results were considered in combination with the results shown in Fig. 5, it was concluded that this carbonaceous material was satisfactorily usable in such uses as under dry condition. Of course, in the case of the oxidation-resistant protective layer comprising only boron carbide, even if boron oxide was produced upon oxidation, this was inferior in wettability with carbon fibers and, hence, ran off without being retained. Thus, it is clear that this carbonaceous material cannot substantially be used under conditions of being exposed to high temperatures of higher than 800°C in the air. It is considered that when a protective layer containing micro-cracks which comprises boron carbide and alumina or alumina/zirconia is provided in addition to the boron carbide layer, even if boron oxide is produced due to the oxidation of boron carbide, this boron oxide is retained in this protective layer and does not run off, and, as a result, the oxidation resistance is markedly improved.

(5) Formation ④ of oxidation-resistant protective layer:

A composite member was produced in the same manner as in the formation ② of the oxidation-resistant protective layer in the above (3), except that Pyrex (trademark) glass in place of alumina was flame sprayed to form an oxidation-resistant protective layer comprising a Pyrex glass layer of 50 μm in thickness on the boron carbide layer in place of the alumina oxidation-resistant protective layer of 50 μm in thickness. The test piece was subjected to the above-mentioned test for measurement of oxidation resistance to find substantially no change in weight even after lapse of 80 hours.

As is clear from the above test results, the carbonaceous materials having the oxidation-resistant protective layer according to the present invention are high in strength at high temperatures (high in thermal shock resistance) and high in reliability as materials (tenacity, shock resistance abrasion resistance) and excellent in environmental resistance (corrosion resistance, oxidation resistance, radiation resistance). In addition, since a C/C composite, an Si-SiC composite material prepared by impregnating the C/C composite with metallic silicon or an SiC composite material is used as a substrate, the carbonaceous materials of the present invention are markedly excellent materials as materials in the fields requiring high temperature characteristics in the air and, besides, light-weight and easiness in operation and as implements such as various kiln implements, for example, setters used for making panels for plasma displays.

Provided is a carbonaceous material having an oxidation-resistant protective layer which is substantially not oxidized at a temperature of at least 800°C in the air. The oxidation-resistant protective layer preferably comprises a plurality of layers and at least one layer of them is a boron-containing layer on which a layer comprising glass or ceramic is formed. The carbonaceous material preferably comprises a C/C composite, an Si-SiC composite material or an SiC composite material. A method for producing the carbonaceous material is also provided.

## Claims

1. A carbonaceous material having an oxidation-resistant protective layer which is substantially not oxidized at a temperature of at least 800°C in the air.

2. A carbonaceous material according to claim 1 which is a C/C composite, an Si-SiC composite material or an SiC composite material.

3. A carbonaceous material according to claim 1 or 2, wherein the protective layer comprises a plurality of layers and at least one layer of them is a boron-containing layer, and a layer comprising glass or ceramic is formed on the boron-containing layer.

4. A carbonaceous material according to claim 3, wherein the boron-containing layer contains boron carbide as a main component.

5. A carbonaceous material according to claim 3 or 4, wherein the boron-containing layer is formed by thermal spraying.

6. A carbonaceous material according to any one of claims 3-5, wherein the glass is a high-melting glass.

7. A carbonaceous material according to any one of claims 3-6, wherein the layer comprising glass is formed by thermal spraying or self-glazing.

8. A carbonaceous material according to claim 3, wherein the layer comprising ceramic is formed by thermal spraying or self-glazing.

**9.** A carbonaceous material according to any one of claims 3-8, wherein the layer comprising ceramic contains micro-cracks.

**10.** A carbonaceous material according to claim 9, wherein the ratio of thermal expansion coefficient of the boron-containing layer and that of the ceramic layer containing micro-cracks is 1:2 or less.

**11.** A setter for firing large-sized materials which are produced from the carbonaceous material of any one of claims 1-10.

**12.** A method for producing a carbonaceous material having an oxidation-resistant protective layer substantially not oxidized at a temperature of at least 800°C in the air which comprises forming the oxidation-resistant protective layer on the surface of the carbonaceous material by thermal spraying.

**13.** A method for producing a carbonaceous material according to claim 12, wherein the oxidation-resistant protective layer formed by thermal spraying is a glass- and/or boron-containing layer.

**14.** A method for producing a carbonaceous material having an oxidation-resistant protective layer substantially not oxidized at a temperature of at least 800°C in the air which comprises forming on the surface of the carbonaceous material at least a boron-containing layer and, if necessary, a layer comprising glass and/or ceramic as the oxidation-resistant protective layer substantially not oxidized at a temperature of at least 800°C in the air.

**15.** A method for producing a carbonaceous material according to any one of claims 12-14 which comprises forming the boron-containing layer by thermal spraying and then thermal spraying thereon at least one oxide selected from alumina and zirconia to form a layer containing micro-cracks.

Fig. 1

Fig. 2(a)

Fig. 2(b)

Fig. 3(a)

Fig. 3(b)

Fig. 4

WEIGHT INCREASE OR DECREASE RATE(%)

TIME

×——× Si-Si C/C

○——○ +B₄C FLAME SPRAYING

△——△ +B₄C+Al₂O₃ FLAME SPRAYING

Fig. 5

**European Patent Office**

## PARTIAL EUROPEAN SEARCH REPORT

Application Number

which under Rule 45 of the European Patent Convention EP 00 10 7507
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | PATENT ABSTRACTS OF JAPAN<br>vol. 1999, no. 13,<br>30 November 1999 (1999-11-30)<br>& JP 11 236286 A (NGK INSULATORS LTD),<br>31 August 1999 (1999-08-31)<br>* abstract *<br>& US 6 054 187 A (ITO SHIGENORI ET AL)<br>25 April 2000 (2000-04-25)<br>* claims 1-7; examples 1-5 *<br>--- | 1,2,<br>12-14 | C04B35/56<br>C04B41/50<br>C04B41/45<br>B32B18/00 |
| X | PATENT ABSTRACTS OF JAPAN<br>vol. 014, no. 250 (C-0723),<br>29 May 1990 (1990-05-29)<br>& JP 02 069382 A (MITSUBISHI HEAVY IND<br>LTD;OTHERS: 01), 8 March 1990 (1990-03-08)<br>* abstract *<br>--- | 1,2,14 | |
| X | US 4 476 178 A (VELTRI RICHARD D ET AL)<br>9 October 1984 (1984-10-09)<br>* claims 1-9; figures 1-3 *<br>---<br>-/-- | 1,2 | |

**TECHNICAL FIELDS SEARCHED (Int.Cl.7)**

C04B
C23C
B32B

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 31 July 2000 | Lindner, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C07)

European Patent Office

# PARTIAL EUROPEAN SEARCH REPORT

**Application Number**

EP 00 10 7507

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | US 4 518 702 A (YOSHIDA HISAYOSHI ET AL) 21 May 1985 (1985-05-21) * column 2, line 54 - column 3, line 21 * * figures 1,2; table 1 * | 1-5,12, 14 | |
| A | PATENT ABSTRACTS OF JAPAN vol. 1995, no. 05, 30 June 1995 (1995-06-30) & JP 07 033567 A (TOCALO CO LTD), 3 February 1995 (1995-02-03) * abstract * | 1-5,8, 12,14 | |

**TECHNICAL FIELDS SEARCHED** (Int.Cl.7)

EPO FORM 1503 03.82 (P04C10)

18

| European Patent Office | INCOMPLETE SEARCH SHEET C | Application Number EP 00 10 7507 |
|---|---|---|

Claim(s) searched completely:
      1-10,12-15

Claim(s) not searched:
      11

Reason for the limitation of the search:

Claim 11 of the application as filed is directed to a "setter for firing large-sized materials".

Not only the term "large-sized" is vague, but also the setter as such is not further characterised by a
technical feature related to its dimension or its construction materials.

Without said technical features, no meaningful search is possible.

EP 1 043 290 A1

## ANNEX TO THE EUROPEAN SEARCH REPORT
## ON EUROPEAN PATENT APPLICATION NO.

EP 00 10 7507

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2000

| Patent document cited in search report | | Publication date | Patent family member(s) | | Publication date |
|---|---|---|---|---|---|
| JP 11236286 | A | 31-08-1999 | US | 6054187 A | 25-04-2000 |
| JP 02069382 | A | 08-03-1990 | JP | 7025612 B | 22-03-1995 |
| US 4476178 | A | 09-10-1984 | NONE | | |
| US 4518702 | A | 21-05-1985 | JP | 1404950 C | 09-10-1987 |
| | | | JP | 59131576 A | 28-07-1984 |
| | | | JP | 62012191 B | 17-03-1987 |
| | | | JP | 1437250 C | 25-04-1988 |
| | | | JP | 59213674 A | 03-12-1984 |
| | | | JP | 62046508 B | 02-10-1987 |
| | | | EP | 0116316 A | 22-08-1984 |
| JP 07033567 | A | 03-02-1995 | NONE | | |

EPO FORM P0459

For more details about this annex : see Official Journal of the European Patent Office, No. 12/82

20